(19) Europäisches Patentamt
European Patent Office
Office européen des brevets

(11) Publication number: **0 177 308 B1**

(12) # EUROPEAN PATENT SPECIFICATION

(45) Date of publication of patent specification: **21.08.91**

(51) Int. Cl.5: **C04B 24/00**, E21B 33/13

(21) Application number: **85306926.8**

(22) Date of filing: **27.09.85**

(54) **Well cementing methods and compositions.**

(30) Priority: **27.09.84 US 655859**
**26.10.84 US 665248**

(43) Date of publication of application:
**09.04.86 Bulletin 86/15**

(45) Publication of the grant of the patent:
**21.08.91 Bulletin 91/34**

(84) Designated Contracting States:
**AT DE FR GB IT NL**

(56) References cited:
**FR-A- 1 509 449**
**FR-A- 2 411 810**
**US-A- 3 346 487**
**US-A- 3 483 007**
**US-A- 4 470 463**
**FR-A- 2 230 600**
**GB-A- 2 157 279**
**US-A- 3 346 488**
**US-A- 4 466 836**

(73) Proprietor: **HALLIBURTON COMPANY**
**P.O. Drawer 1431**
**Duncan Oklahoma 73536(US)**

(72) Inventor: **Childs, Jerry Dale**
**3101 Springdale Court**
**Duncan Oklahoma 73533(US)**
Inventor: **Sutton, David Leroy**
**214 North 31st**
**Duncan Oklahoma 73533(US)**
Inventor: **Sabins, Freddie Lynne**
**2213 Briarcrest**
**Duncan Oklahoma 73533(US)**
Inventor: **Love, Roosevelt**
**3309 Kristin Lane**
**Duncan Oklahoma 73533(US)**
Inventor: **Weigand, Willis Alan**
**1431 Pawtucket Blvd. E-62**
**Lowell Massachusetts 01854(US)**

(74) Representative: **Wain, Christopher Paul et al**
**A.A. THORNTON & CO. Northumberland House 303-306 High Holborn**
**London WC1V 7LE(GB)**

**EP 0 177 308 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to cementing compositions having a retarded set time, which compositions are particularly but not exclusively useful for cementing in wells.

In cementing operations carried out in oil, gas and water wells, Portland cement is normally mixed with about 40% to 50% of water, based on the weight of dry cement, to form a pumpable slurry which is pumped into a subterranean zone to be cemented by way of the wellbore penetrating such zone. After placement in the zone, the cement slurry sets into a hard mass.

While cement compositions are utilized in carrying out a variety of operations in wells to accomplish a variety of purposes, cement compositions are most commonly used in well operations for bonding casing within the wellbore and sealing zones whereby undesirable communication between zones is prevented. With the drilling .of wells for the production of hydrocarbons to increased depths during recent years, extended cementing times are required to mix cement compositions and pump them to the desired zones in the wells. In addition, at the greater depths, elevated temperatures are encountered which accelerate the normal sets of cement compositions to the point where the cementing times, i.e., the mixing and placement times, exceed the pumpable times of the cement compositions, making it difficult or impossible to place the cement compositions at the desired locations in the wells. The term "pumpable time" is used herein to mean the total time between when a cement composition is mixed and when the composition becomes too thick to pump.

Various methods of retarding the sets of cement compositions and thereby increasing the pumpable times thereof have heretofore been employed in order to make possible the cementing of deep wells where high temperatures are encountered. These include the use of special slow setting hydraulic cements and/or the addition of set retarding agents to the cement slurries. While various set retarding agents have been effective in extending the pumpable times of cement compositions subjected to temperatures up to about 400 ° F (204 ° C), problems have been encountered where the cement compositions are subjected to higher temperatures. That is, heretofore, even when the cement compositions include set retarders, in deep wells where the cement compositions are subjected to temperatures above about 400 ° F (204 ° C), the cementing times often have exceeded the pumpable times of the cement compositions whereby cementing operations have been unsuccessful or incomplete.

In one aspect, the present invention provides set retarded cement compositions which are particularly suitable for use in cementing subterranean zones wherein the cement compositions are subjected to elevated temperatures. Methods of cementing high temperature subterranean zones penetrated by wellbores using the cement compositions are also provided.

The set retarded cement compositions of the present invention are comprised of a hydraulic cement, sufficient water to form a pumpable cement slurry which will set into a hard mass, and an effective amount of a set retarder comprised of a methylene phosphonic acid derivative or a mixture of such derivatives. While the use of certain methylene phosphonic acid derivatives of aminoethyl piperazine as set retarder additives for cement slurries is described in US-A-4466836, these compounds have not been noted to be effective at elevated temperatures. The pumpable times of the compositions of the present invention are of durations such that the compositions can be effectively utilized for cementing wells wherein the compositions are subjected to temperatures up to 550 ° F (288 ° C) and higher.

The methylene phosphonic acid derivatives which are suitable for use in accordance with this invention as set retarders are as follows:

(1) Compounds having the structural formula:

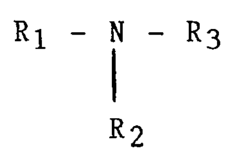

wherein

$R_1$, $R_2$ and $R_3$ are independently hydrogen or $-CH_2PO_3(X)_2$ with the limitation that one of $R_1$, $R_2$ and $R_3$ is always $-CH_2PO_3(X)_2$;

X is hydrogen, an alkali metal cation, ammonium, a protonated amine or an alkaline earth metal cation in which case there is only one X per methylene phosphonate group; and

at least one X is hydrogen which is associated with the nitrogen atom by way of an intramolecular

hydrogen bond between the nitrogen atom and an oxygen atom attached to a phosphorus atom.
(2) Compounds having the structural formula:

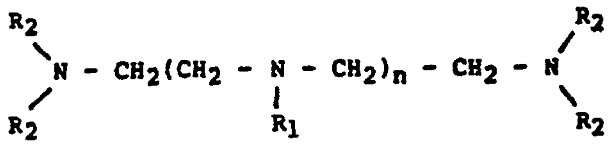

wherein:

n is an integer from 1 to 4;
$R_1$ is hydrogen or $-CH_2PO_3(X)_2$;
$R_2$ is hydrogen, $-CH_2PO_3(X)_2$ or $-CH_2CH_2N(R_3)_2$ wherein $R_3$ is hydrogen or $-CH_2PO_3(X)_2$;
X is hydrogen, an alkali metal cation, ammonium, a protonated amine or an alkaline earth metal cation in which case there is only one X per methylene phosphonate group; and

at least one of $R_1$, $R_2$ or $R_3$ is $-CH_2PO_3(X)_2$ and one X is hydrogen which is associated with a nitrogen atom by way of an intramolecular hydrogen bond between the nitrogen atom and an oxygen atom attached to a phosphorus atom. (3) Compounds having the structural formula:

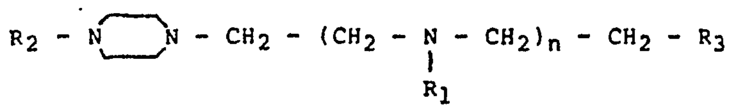

wherein:

n is an integer from 0 to 4;
$R_1$ is hydrogen or $-CH_2PO_3(X)_2$;
$R_2$ is hydrogen, $-CH_2PO_3(X)_2$ or $-CH_2CH_2N(R_4)_2$ wherein $R_4$ is hydrogen or $-CH_2PO_3(X)_2$;
$R_3$ is $-N(R_5)_2$ or

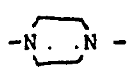

$R_5$ wherein $R_5$ is hydrogen or $-CH_2PO_3(X)_2$;
X is hydrogen, an alkali metal cation, ammonium, a protonated amine or an alkaline earth metal cation in which case there is only one X per methylene phosphonate group; and

at least one of $R_1$, $R_2$ or $R_3$ is $-CH_2PO_3(X)_2$ and one X is hydrogen which is associated with a nitrogen atom by way of an intramolecular hydrogen bond between the nitrogen atom and an oxygen atom attached to a phosphcrus atom.

(4) Compounds having the structural formula:

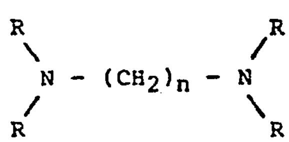

wherein:

n is an integer from 2 to 6;
R is hydrogen, $-CH_2PO_3(x)_2$ or $-CH_2CH_2N(R_1)_2$ wherein $R_1$ is hydrogen or $-CH_2PO_3(X)_2$;
X is hydrogen, an alkali metal cation, ammonium, a protonated amine or an alkaline earth metal cation in which case there is only one X per methylene phosphonate group; and

at least one R is $-CH_2PO_3(X)_2$ and one X is hydrogen which is associated with a nitrogen atom by way of an intramolecular hydrogen bond between the nitrogen atom and an oxygen atom attached to a phosphorus atom.

(5) Compounds having the structural formula:

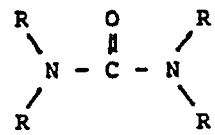

wherein:

R is hydrogen, $-CH_2PO_3(X)_2$ or $-CH_2CH_2N(R_1)_2$ wherein $R_1$ is hydrogen or $-CH_2PO_3(X)_2$;

X is hydrogen, an alkali metal cation, ammonium, a protonated amine or an alkaline earth metal cation in which case there is only one X per methylene phosphonate group; and

at least one R is $-CH_2PO_3(X)_2$ and one X is hydrogen which is associated with a nitrogen atom by way of an intramolecular hydrogen bond between the nitrogen atom and an oxygen atom attached to a phosphorus atom.

(6) A compound having the structural formula:

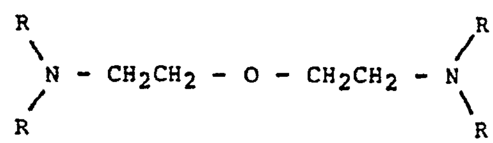

wherein:

R is hydrogen, $-CH_2PO_3(X)_2$ or $-CH_2CH_2N(R_1)_2$ wherein $R_1$ is hydrogen or $-CH_2PO_3(X)_2$;

X is hydrogen, an alkali metal cation, ammonium, a protonated amine or an alkaline earth metal cation in which case there is only one X per methylene phosphonate group; and

at least one R is $-CH_2PO_3(X)_2$ and one X is hydrogen which is associated with a nitrogen atom by way of an intramolecular hydrogen bond between the nitrogen atom and an oxygen atom attached to a phosphorus atom.

(7) Compounds having the structural formula:

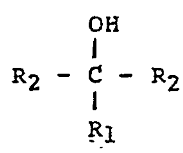

wherein:

$R_1$ is hydrogen or $-CH_3$;

$R_2$ is $-CH_2PO_3(X)_2$ or $-CH_2NHCH_2PO_3(X)_2$;

X is hydrogen, an alkali metal cation, ammonium, a protonated amine or an alkaline earth metal cation in which case there is only one X per methylene phosphonate group; and

when nitrogen is present, at least one X is hydrogen which is associated with the nitrogen atom by way of an intramolecular hydrogen bond between the nitrogen atom and an oxygen atom attached to a phosphorus atom.

As mentioned above, most of the derivatives include at least one intramolecular hydrogen bond between a nitrogen atom and an oxygen atom which is attached to a phosphorus atom. The hydrogen involved in this bond is different from the other acidic hydrogens in that it is difficult to neutralize and should be left intact in the compound. That is, the removal of the intra-molecular hydrogen bond formed when the methylene phosphonic acid derivative contains nitrogen greatly decreases or eliminates the effectiveness of the derivative as a cement composition setting rate retarder. The other acidic protons may however be neutralized as indicated above.

In this specification, references are made to compounds having substituents therein. The amount of substituent relative to the compound is generally expressed in terms of the number of moles or groups of substituent, and this means the number of moles (or other unit) of substituent per mole (or other unit) of the compound in question.

Examples of suitable compounds falling in the various categories listed above are as follows:

(1) aminotri(methylene phosphonic acid), the sodium salt of aminotri(methylene phosphonic acid), and

triethanolamine substituted with 3 moles of methylene phosphonic acid;

(2) ethylenediamine substituted with 1 to 4, preferably 2 or 3, moles methylene phosphonic acid, the sodium salt of the foregoing compound diethylenetriamine substituted with 1 to 5, preferably 2 or 3, moles of methylene phosphonic acid and triethylenetetramine substituted with 1 to 6 moles of methylene phosphonic acid;

(3) piperazinoethylethylethyenediamine substituted with 1 to 4, preferably 3, moles of methylene phosphonic acid and the sodium salt of this compound;

(4) propylenediamine substituted with 1 to 4 moles, preferably 3 moles, of methylene phosphonic acid, the sodium salt of the foregoing compound, and butylenediamine substituted with 1 to 4, preferably 3, moles of methylene phosphonic acid;

(5) urea substituted with 1 to 4, preferably 1 to 3, moles of methylene phosphonic acid;

(6) diethyleneamine ether substituted with 1 to 4, preferably 2 to 3, moles of methylene phosphonic acid; and

(7) ethanol substituted with 1 or 2 moles of methylene phosphonic acid.

Of the foregoing compounds ethylenediamine substituted with 2 or 3 moles of methylene phosphonic acid, diethylenetriamine substituted with 2 or 3 moles of methylene phosphonic acid, triethylenetetramine substituted with 1 to 6 moles of methylene phosphonic acid, and mixtures of such compounds are preferred.

The most preferred compounds for use in the set retarded cement compositions of the first aspect of this invention are methylene phosphonic acid substituted triethylenetetramine compounds having in the range of from 1 to 6 methylene phosphonic acid groups per molecule, preferably from 1 to 3 methylene phosphonic acid groups per molecule and most preferably 3 methylene phosphonic acid groups per molecule.

The substituted triethylenetetramine compounds are formed by the addition of formaldehyde and orthophosphorous acid to triethylenetetramine in the presence of an acid catalyst, preferably hydrochloric acid. Methylene phosphonic acid is generated in situ and substitutes at one or more of the six active sites of the triethylenetetramine to form a methylene phosphonic acid substituted triethylenetetramine compound having in the range of from 1 to 6 methyl phosphonic acid groups per molecule. A liquid product can be formed by neutralization of the acid reaction product to a pH of 7.0 ± 0.1 with additional triethylenetetramine. A solid product can be formed by adding calcium hydroxide to the acid reaction product until a pH of 2.0 ± 0.1 has been reached. The thick viscous product produced is then precipitated as the calcium salt in an excess of methyl alcohol, filtered and dried. An alternate and more preferred technique for producing a solid product is to adsorb the liquid product onto a quantity of silica flour at about 50% loading rate.

Generally, the methylene phosphonic acid derivatives or mixture of derivatives are present in the cement compositions in an amount of from about 1% to about 10% by weight of dry cement utilized.

A preferred setting rate retarded cement composition is comprised of a hydraulic cement and water slurry containing a set retarder selected from the group consisting of ethylenediamine substituted with 2 or 3 moles of methylene phosphonic acid, diethylenetriamine substituted with 2 or 3 moles of methylene phosphonic acid, triethylenetetramine substituted with 1 to 6 moles of methylene phosphonic acid and mixtures of such compounds, the retarder being present in said composition in an amount of from about 1% to about 10% by weight of dry cement utilized in the slurry.

A more preferred set retarded cement composition of this invention is comprised of a hydraulic cement, sufficient water to form a pumpable slurry which will set into a hard mass, and methylene phosphonic acid substituted triethylenetetramine having in the range of from 1 to 6 methyl phosphonic acid groups per molecule present in the composition in an amount in the range of from about 1% to about 10% by weight of dry cement. In a most preferred such composition, the retarder is comprised of methylene phosphonic acid substituted triethylenetetramine having 3 methyl phosphonic acid groups per molecule present in the composition in an amount in the range of from about 2% to about 8% by weight of dry cement.

A particularly suitable composition is comprised of Portland cement, water present in the composition in an amount in the range of from about 35% to about 62% by weight of dry cement, and methylene phosphonic acid substituted triethylemetetramine having 3 methylene phosphonic acid groups per molecule present in the composition in an amount in the range of from about 2% to about 8% by weight of dry cement.

In order to improve the stability and permanent strength of the cement composition after setting in a high temperature environment, a particulate crystalline silica component can be included in the composition. The silica material is a particulate crystalline silica having a particle size of less than about 10 mesh (2mm sieve aperture), preferably 20-80 mesh (0.8 - 0.18mm sieve aperture) and most preferably 30 mesh

(0.60mm sieve aperture). When particulate crystalline silica is included in the cement compositions of this invention it is preferably present in the compositions in an amount in the range of from about 17% to about 35% by weight of dry cement therein with the methylene phosphonic acid derivative retarder or retarders being present therein in an amount in the range of from about 2% to about 8% by weight of dry cement.

A particularly preferred composition which includes particulate crystalline silica is comprised of Portland cement, silica present in the composition in an amount in the range of from about 25% to about 35% by weight of dry cement, water present in the composition in an amount in the range of from about 45% to about 55% by weight of dry cement and methylene phosphonic acid substituted triethylenetetramine having 3 methylene phosphonic acid groups per mole present in the composition in an amount in the range of from about 3% to about 6% by weight of dry cement.

The most preferred composition including silica is comprised of Portland API Class H cement, particulate crystalline silica present in an amount of about 35% by weight of dry cement, water present in an amount of about 54% by weight of dry cement and methylene phosphonic acid substituted triethylenetetramine having 3 methylene phosphonic acid groups per mole present in an amount in the range of from about 3% to about 6% by weight of dry cement.

The water utilized to form the compositions of this invention can be fresh water, salt water, brine, seawater or other water which does not contain materials adversely reactive with components of the compositions. As will be understood by those skilled in the art, known components and/or additives can also be included in the compositions for bringing about desired results such as dispersing agents, density reducing components, fluid loss reducing additives, friction reducing additives, etc.

In carrying out the methods of the present invention for cementing a zone penetrated by a wellbore using a settable hydraulic cement slurry wherein the slurry is subjected to elevated temperatures, a pumpable set retarded cement composition described above is first prepared using conventional equipment. The methylene phosphonic acid derivative retarder or retarders can be added to the cement in either solid or liquid form prior to combining water therewith to form a slurry thereof or the retarder can be mixed with the slurry after it is formed.

Once the cement composition has been prepared, it is pumped or otherwise introduced into the zone to be cemented and then allowed to set into a hard mass therein.

The particular quantity of retarder utilized in a cement composition of this invention determines the pumpable time of the composition and the pumpable time is increased by increasing the quantity of retarder. Generally, compositions containing relatively small quantities of retarder (1% to 3% by weight of cement) have long pumpable times (up to 8 hours) at temperatures above 400° F (204° C). The compositions have sufficient pumpable times, i.e., pumpable times exceeding cementing times for deep wells wherein the compositions are subjected to temperatures up to 600° F (316° C).

We have described above a first aspect of the present invention in which the setting time of certain cement compositions is retarded by the use of certain methylene phosphonic acid derivatives. These compositions are particularly (but not exclusively) suited to high temperature environments. In accordance with a second aspect of the present invention, we have found that the above compositions can advantageously also contain a hydratable gel-forming material to minimise the setting of solids and separation of free water. These compositions are not so suited to high temperature applications (because of the presence of the gel-forming material) and are usually selectively activated to set into a hard mass by mixing therewith a suitable activating agent. The compositions of the first aspect of the invention can also, of course, be so activated if desired.

The preferred compositions of the second aspect of the invention are as defined for the first aspect except that they also comprise a hydratable gel forming material selected from hydratable cellulose derivatives, polyvinyl alcohol, and polymers of 2-acrylamido-2-methylpropane sulfonic acid, sodium vinylsulfonate, acrylamide, N,N-dimethylacrylamide, acrylic acid, and mixtures of the foregoing compounds present in said slurry in an amount in the range of from about 0.01% to about 1.5% by weight of the dry cement, to minimize the settling of solids and separation of free water therefrom; and wherein the retarder 1. selected from (a), (b), (c), (d) and (e) as defined in claim 1

Of the preferred retarders listed above for the first aspect of the invention, aminotri-(methylenephosphonic acid), ethylenediamine substituted with from 1 to 4 moles of methylenephosphonic acid, diethylenetriamine substituted with from 1 to 5 moles of methylenephosphonic acid, triethylenetetramine substituted with from 1 to 6 moles of methylenephosphonic acid, and mixtures of such compounds, are preferred for the second aspect of the invention.

The most preferred compounds for use in the second aspect of the invention are aminotri-(methylenephosphonic acid) and methylenephosphonic acid substituted diethylenetriamine compounds having in the range of from 1 to 5 methylenephosphonic acid groups per molecule, preferably from 3 to 5

methylenephosphonic acid groups per molecule, and most preferably 5 methylenephosphonic acid groups per molecule.

The aminotri(methylenephosphonic acid) and substituted diethylenetriamine compounds are formed by the addition of formaldeyde and orthophosphorous acid to aqueous solutions of ammonia or diethylenetriamine in the presence of an acid catalyst, preferably hydrochloric acid. Methylenephosphonic acid is generated in situ and substitutes at the nitrogen atom(s) of the ammonia or diethylenetriamine. In the case of ammonia, three methylenephosphonic acid groups are attached to the nitrogen atom. In diethylenetriamine, there are five sites which can be substituted with methylenephosphonic acid groups corresponding to each (-N-H) functionality in the molecule. The degree of substitution depends on the molar ratio of the starting reactants and the reaction conditions. It is possible for a diethylenetriamine molecule to contain from 1 to 5 methylenephosphonic acid groups.

When aldehydes or ketones having boiling points below the temperatures at which this invention is practiced are utilized in the practice of the invention, usually significantly better yields of the desirable aminoalkylene phosphonic acids (based on the amount of aldehyde or ketone charged into the reaction vessel) can be attained if the aldehyde or ketone is added slowly to the mixture of orthophosphorous acid and reactive nitrogenous material, while the temperature of said mixture is within the desired range. For example, when an aqueous mixture consisting of one mole of ammonia, three moles of orthophosphorus acid, and three moles of formaldehyde (calculated theoretically to result in the production of one mole of ammonium trimethylenephosphonic acid) is held at 100° C. for an extended period of time (in order to assure "complete" reaction), only about 0.45 mole of the desired product is made. However, if the same amount of formaldehyde is added slowly (i.e., over a period of about 15 minutes) to a blend of the same amount of water, one mole of ammonia, and three moles of phosphorous acid held at a temperature of about 100° C., more than 0.70 mole of the desired product is produced. Thus, the addition of the aldehyde or ketone slowly to a hot mixture of phosphorous acid plus one of the desirable reactive nitrogenous materials described above is preferred.

The particular quantity of the retarder (or set delaying agent) added to an aqueous hydraulic cement slurry controls the duration of the time the cement composition will remain in a pumpable fluid state. However, in accordance with the present invention, a quantity is utilized which will allow the resulting cement composition to be retained in a pumpable fluid state for a period of time exceeding the required time. After this time, the cement composition of the second aspect is preferably activated by mixing a set activating agent therewith just prior to placement as will be described in detail hereinbelow. Generally, in the second aspect of the invention, the phosphonic acid retarder derivative or derivatives utilized are combined with an aqueous hydraulic cement slurry in an amount in the range of from about 0.1% to about 5.0% by weight of dry cement utilized to form the slurry. Such a quantity will cause the slurry to remain in a pumpable fluid state for a time period ranging from about 1 day up to about 45 days.

The hydratable gel forming materials used in the second aspect of the invention prevent or at least reduce the settling of solids and/or the separation of free water from the set delayed cement composition during long-term storage. They hydrate to provide gel strength and limited viscosity to the compositions. While various hydratable materials can be utilized, particularly suitable such materials are those selected from the group consisting of hydratable cellulose derivatives, polyvinyl alcohol, and homopolymers, copolymers and/or terpolymers of 2-acrylamido-2-methylpropane sulfonic acid, sodium vinylsulfonate, acrylamide, N,N-dimethylacrylamide, acrylic acid, and mixtures of the foregoing compounds. Of these, hydratable cellulose derivatives such as hydroxyalkylcellulose, carboxyalkylcellulose and carboxyalkylhydroxyalkylcellulose are preferred. The most preferred such hydratable material is hydroxyethylcellulose.

As mentioned above, the hydratable gel forming material or materials used are combined with the cement compositions in relatively small amounts so that the settling of solids and separation of free water are minimized but the viscosity of the cement composition is not increased to the point whereby pumpability is reduced. Generally, the hydratable material is combined with a cement composition of this invention in an amount in the range of from about 0.01% to about 1.5% by weight of dry cement therein. When the hydratable material is selected from the group consisting of hydroxyalkylcellulose, carboxyalkylcellulose, carboxyalkylhydroxyalkylcellulose and mixtures thereof, the material or materials are combined with the cement slurry in an amount in the range of from about 0.1% to about 1.0% by weight of dry cement therein. The preferred hydratable gel forming material i.e., hydroxyethylcellulose, is preferably combined with the aqueous cement slurry in an amount in the range of from about 0.1% to about 0.5% by weight of dry cement therein, most preferably about 0.2%.

A preferred set delayed cement composition capable of being retained in a pumpable fluid state for a long time period and then caused to set by mixing a set activating agent therewith just prior to placement is comprised of a hydraulic cement, sufficient water to form a pumpable slurry, a hydratable gel forming

materials selected from the group consisting of hydroxyalkylcellulose, carboxyalkylcellulose, carboxyalkylhydroxyalkylcellulose, and mixtures thereof present in the composition in an amount in the range of from about 0.1% to about 1.0% by weight of dry cement therein, and a set delaying agent selected from the group consisting of aminotri(methylenephosphonic acid), diethylenetriamine substituted with 5 moles of methylenephosphonic acid, and mixtures of such compounds present in the composition in an amount in the range of from about 0.1% to about 2.5% by weight of dry cement therein.

Portland cement is generally preferred for use in the compositions of this invention because of its low cost, availability and general utility, but other cements can also be utilized such as high alumina content, pozzolan, high gypsum cements, high silica cements and cements which contain a high calcium aluminate content. Portland cements of API Classes H and G are preferred cements for use in this invention in most instances, although the other API classes of cement can also be utilized. The characteristics of these cements are described in API Specification 10, Second Edition dated June 15, 1984, of the American Petroleum Institute to which reference should be made for further details. A highly useful and effective cement slurry base for use in practicing this invention utilizes API Class H Portland cement mixed with water to provide a density of from about 11.3 to about 18.0 pounds per gallon (1.36 to 2.16 g/cm$^3$).

A particularly preferred set retarded cement composition of the second aspect of this invention capable of being retained in a pumpable fluid state for a long time period and then caused to set by mixing a set activating agent therewith is comprised of API Class H Portland cement, water in an amount in the range of from about 38% to about 46% by weight of dry cement, hydroxyethylcellulose in an amount in the range of from about 0.1% to about 0.5% by weight of dry cement therein, most preferably 0.2% and aminotri-(methylenephosphonic acid) or diethylenetriamine substituted with 5 moles of methylenephosphonic acid present in an amount in the range of from about 0.2% to about 0.7% by weight of dry cement. Most preferably, the set retarder agent is aminotri(methylenephosphonic acid) and is present in the composition in an amount of about 0.5% by weight of dry cement therein.

The set delaying or retarding effect imparted to the set delayed cement compositions of the second aspect of this invention is preferably terminated by heating the cement compositions to a high temperature, e.g., above roughly 300 °F (149 °C ) depending on the concentration of the set delaying agent. Thus, when using the cement compositions for carrying out cementing operations in such temperature environments, the compositions can be placed therein whereby they are activated upon being heated and eventually set into hard masses. A more preferred technique for activating the set delayed compositions is to mix one or more set activating agents with the compositions just prior to placement. Particularly suitable such set activating agents are aqueous sodium silicate solutions, paraformaldeyde, calcium chloride and mixtures of two or more such agents.

Sodium silicate is readily commercially available in aqueous solutions of various grades. An aqueous sodium silicate solution having a density of 11.67 pounds per gallon (1.4g/cm$^3$) and an $Na_2O:SiO_2$ weight ratio of about 1:3.22 is particularly suitable for use in accordance with this invention, but other solutions can be used.

When a low density cement composition is desired, an aqueous sodium silicate solution extender can be combined with a set delayed cement composition of this invention in a relatively large quantity (up to 100% by volume of the cement composition) to produce a light-weight activated cement composition (the sodium silicate solution functions as an extender to lower the density and also as an activating agent). Preferably, a small quantity of calcium chloride or paraformaldehyde set activating agent is combined with the set delayed cement composition in addition to the aqueous sodium silicate solution. The preferred set activating agent for normal density cement compositions (those not including an extender) is a mixture of paraformaldehyde and calcium chloride in equal proportions. Generally, the set activating agent used is combined with a set delayed cement composition in an amount in the range of from about 0.5% to about 2.5% by weight of the cement composition.

In carrying out the methods of this invention for cementing a zone at a remote location, a set delayed cement composition of the type described above is first prepared at a convenient location. Once prepared, the set delayed composition is then transported to the remote location and, if required, stored at such location. When all or part of the stored cement composition which is in a pumpable fluid state is to be used, it is mixed with a set activating agent or agents of the type described above followed by the placement of the activated mixture in the zone to be cemented. A particularly convenient technique for mixing the activating agent and other components such as an aqueous sodium silicate solution extender and/or other additives is to combine the activating agent and other components and/or additives with the set delayed cement composition on the fly, i.e., the activating agent and other components and/or additives are continuously mixed with the set delayed cement composition as they both are pumped into the zone to be cemented.

As will be understood by those skilled in the art, a variety of additives can be incorporated in the cement compositions to modify the properties thereof such as dispersants, viscosifiers, and weight adjusting materials. Also, additives for reducing fluid loss to surrounding formations, for reducing friction during pumping, and for imparting other properties to the cement compositions can be utilized.

In order to facilitate a clear understanding of the invention, the following Examples are given. With regard to amounts given in the Examples, the term "sack" refers to a standard sack weighing 94 pounds (42.5 kg) as defined in API Bulletin 10-C, Third Edition, April 15th, 1984, of the American Petroleum Institute. This publication sets forth the nomenclature used in oil well cementing technology and is also incorporated herein by reference. Examples 1 to 5 illustrate the first aspect of the invention, and Examples 6 to 10 illustrate the second aspect of the invention.

Example 1

A number of cement compositions comprised of Portland Cement, i.e., Lone Star Class H cement, particulate crystalline silica having a particle size of from 20-80 mesh (0.81 - 0.18mm sieve aperture) in an amount of 35% by weight of dry cement, fresh water in an amount of 54% by weight of dry cement (6.1 gallons water/sack - 0.55 $dm^3/kg$) and various quantities of methylene phosphonic acid substituted triethylenetetramine (TETA) having various degrees of methyl phosphonic acid group ($-CH_2PO_3H_2$) substitution are prepared. The compositions are tested for thickening time at 450°F (232°C) in accordance with the standard API thickening time testing procedures set forth in the publication API Specification 10, Second Edition, June 15, 1984, which is also incorporated herein by reference. The results of these tests are given in Table I below.

TABLE I - THICKENING TIME TESTS

| Quantity of TETA Retarder in Slurry % by Weight of Dry Cement | Number of $-CH_2PO_3H_2$ Substituents per Molecule of TETA | Thickening Time at 450°F (232°C) Hours : Minutes |
|---|---|---|
| 0.517 | 1 | 1:49[1] |
| 0.775 | 1 | 2:34[1] |
| 1.030 | 1 | 4:45[1] |
| 0.488 | 2 | 2:10[1] |
| 0.610 | 2 | 3:43[1] |
| 0.732 | 2 | 5:20[1] |
| 0.853 | 2 | 5:30[2] |
| 0.323 | 3 | 2:11[1] |
| 0.388 | 3 | 3:13[1] |
| 0.517 | 3 | 8:09[1] |
| 0.647 | 3 | 6:20[2] |
| 0.905 | 3 | 6:00[2] |
| 0.273 | 4 | 2:00[1] |
| 0.410 | 4 | 6:40[3] |
| 0.547 | 4 | 12:15[3] |
| 0.683 | 4 | 6:35[2] |
| 0.957 | 4 | 6:15[2] |
| 0.333 | 6 | 2:18[1] |
| 0.500 | 6 | 4:43[3] |
| 0.666 | 6 | 6:24[3] |

1 These slurries pumped normally on the thickening time tester, i.e., the initial viscosity was low and remained low until a sharp rise indicated cement hydration.

2 These slurries were thin fluids when removed from the thickening time tester. No sign of hydration was observed.

3 These slurries gelled to viscosities in excess of 70 Bc and did not undergo hydration to a hard set.

From Table I it can be seen that the cement compositions of the present invention have excellent thickening times at 450° F (232° C) The compositions containing TETA substituted with one, two and three $-CH_2PO_3H_2$ substituents per molecule all yielded good response properties with the compositions containing TETA substituted with three $-CH_2PO_3H_2$ substituents giving the best results, i.e., the longest thickening times with the least retarder quantities. The compositions containing TETA substituted with four and six $-CH_2PO_3H_2$ substituents responded similarly except that gelation prior to strength development occurs at some retarder concentrations.

Example 2

A number of cement compositions comprised of Lone Star Class H cement, Trinity Class H cement or Centex Class H cement, particulate crystalline silica having a particle size of 20-80 mesh (0.81 - 0.18mm sieve aperture) in an amount of 35% by weight of dry cement, fresh water in an amount of 54% by weight of dry cement (6.1. gallons/sacks - 0.55 $dm^3/kg$) and various quantities of TETA substituted with three $-CH_2PO_3H_2$ groups per molecule are prepared.

The substituted TETA is prepared by reacting formaldehyde and phosphorus acid with TETA in the presence of a hydrochloric acid catalyst. The resulting liquid is adsorbed onto silica flour at a 50% loading rate. The resulting solid retarder is utilized in preparing the compositions.

The compositions are tested for thickening times in accordance with the testing procedures set forth in the publication API Specification 10, Second Edition, June 15, 1984, at 400° F (204° C), 450° F (232° C), 500° F (260° C) and 550° F (288° C). The results of these tests are given in Table II below.

TABLE II - THICKENING TIME TESTS

| Quantity of Substituted TETA Retarder in Slurry % by Weight of Dry Cement | Type of Cement Used | Thickening Time Hours : Minutes | | | |
|---|---|---|---|---|---|
| | | @400°F 204°C | @450°F 232°C | @500°F 260°C | @550°F 288°C |
| 1.0 | Lone Star Class H | 2:46 | | | |
| 1.2 | Lone Star Class H | 4:18 | | | |
| 1.3 | Lone Star Class H | 4:52 | | | |
| 1.5 | Lone Star Class H | 8:12+ | | | |
| 1.2 | Lone Star Class H | | 3:22 | | |
| 1.3 | Lone Star Class H | | 5:23 | | |
| 1.5 | Lone Star Class H | | 6:29 | | |
| 1.7 | Lone Star Class H | | 7:36 | | |
| 1.2 | Trinity Class H | | 1:28 | | |
| 1.5 | Trinity Class H | | 1:59 | | |
| 1.8 | Trinity Class H | | 4:25 | | |
| 2.0 | Trinity Class H | | 6:22 | | |
| 1.2 | Centex Class H | | 1:52 | | |
| 1.3 | Centex Class H | | 2:28 | | |
| 1.5 | Centex Class H | | 4:06 | | |
| 1.7 | Centex Class H | | 8:00+ | | |
| 1.8 | Lone Star Class H | | | 4:20 | |
| 2.0 | Lone Star Class H | | | 5:14 | |
| 2.2 | Lone Star Class H | | | 7:05 | |
| 2.5 | Lone Star Class H | | | | 4:00 |
| 2.7 | Lone Star Class H | | | | 5:00 |
| 2.8 | Lone Star Class H | | | | 7:30 |

From Table II it can be seen that the compositions of this invention have excellent thickening times at elevated temperatures.

Example 3

Cement compositions of the type described in Example 1 above are prepared using salt (NaCl) water

instead of fresh water. These compositions are tested for thickening times at 450° F (232° C). The results of these tests are given in Table III below.

TABLE III - THICKENING TIME TESTS

| Quantity of Substituted TETA Retarder in Slurry % by Weight of Dry Cement | Type of Cement Used | Water Used | Thickening Time at 450°F (232°C) Hours:Minutes |
|---|---|---|---|
| 3.0 | Lone Star Class H | 18% NaCl Solution | 2:43 |
| 3.3 | Lone Star Class H | 18% NaCl Solution | 3:32 |
| 4.0 | Lone Star Class H | 18% NaCl Solution | 8:00+ |
| 3.3 | Lone Star Class H | 35% NaCl Solution | 2:26 |
| 3.8 | Lone Star Class H | 35% NaCl Solution | 4:27 |
| 4.0 | Lone Star Class H | 35% NaCl Solution | 8:00+ |

## Example 4

Cement compositions of the present invention containing additional components and additives to form high density (19.0 lb/gal. - 2.28 g/cm$^3$) slurries are prepared. The compositions are comprised of Lone Star Class H cement, fresh water in an amount of 6.8 gal/sack (0.61 dm$^3$/kg) of dry cement, particulate crystalline silica having a particle size of 20-80 mesh (0.81 - 0.18mm sieve aperture) in an amount of 35% by weight of dry cement, Hematite in an amount of 73 lb/ sack, (0.77 kg/kg), sodium chloride in the amount of 21.1 lb/sack (0.22 kg/kg), carboxymethylhydroxyethylcellulose in an amount of 1.0% by weight of dry cement, an additive containing an admixture of deltagluconolactone in an amount of 1.0% by weight of dry cement, an additive containing polypropylene glycol in an amount of about 0.25% by weight of dry cement and various amounts of TETA substituted with three $-CH_2PO_3H_2$ groups The compositions are tested for thickening times at 450° F (232° C). The results of these tests are given in Table IV below.

TABLE IV - THICKENING TIME TESTS

| Quantity of Substituted TETA Retarder in Slurry % by Weight of Dry Cement | Thickening Time Hours:Minutes |
|---|---|
| 4.3 | 2:56 |
| 4.9 | 3:07 |
| 5.5 | 3:28 |
| 6.5 | 5:02 |

## Example 5

Methylene phosphonic acid derivative compounds from the seven categories of derivatives set forth above are utilized to form set retarded cement compositions. Each of the compositions includes Lone Star Class H cement, particulate crystalline silica having a particle size of 20-80 mesh (0.81 - 0.18mm sieve aperture) in an amount of 35% by weight of dry cement, fresh water in an amount of 54% by weight of dry

cement and a quantity of one of the set retarding compounds. The compositions are tested for thickening time at 450° F (232° C) or 500° F (260° C) in accordance with the standard API thickening time procedures set forth in API Specification 10, Second Edition, June 15, 1984. The results of these tests are set forth in Table V below.

TABLE V - THICKENING TIME TESTS

| Category | Specific Retarder Compound Used | Quantity of Retarder in Slurry, % by Weight of Dry Cement | Thickening Time, Hrs:Mins. 450°F (232°C) | 500°F (260°C) |
|---|---|---|---|---|
| (1) | aminotrimethylene phosphonic acid | 5.0 | | 5:33 |
| (2) | diethylenetriamine substitued with 5 moles of methylene phosphonic acid | 1.0 | 6:30+ | |
| (3) | piperazinoethyl ethylenediamine substituted with 10% methylene phosphonic acid | 6.7 | 4:20+ | |
| (4) | ethylenediamine substituted with 4 moles of methylene phosphonic acid | 4.0 | | 24:00+ |
| (5) | urea substituted with 4 moles of methylene phosphic acid | 0.6 | 3:04 | |
| (6) | diethyleneamine ether substituted with 4 moles of methylene phosphic acid | 1.5 | 1:40 | |
| (7) | 2-propanoldiamine substituted with 2 moles of methylene phosphonic acid | 0.3 | 6:00+ | |

Example 6

The set delayed cement compositions of the second aspect of the invention are capable of being retained in pumpable fluid states for long periods of time and have a minimum settling of solids and separation of free water during storage. Once the cement compositions are to be pumped, they must be capable of being activated whereby hydration of the cement occurs and reasonable compressive strengths are developed. The activating agents must not flash-set the compositions in that the compositions must be placed with adequate margins of safety after the activating agents are mixed therewith.

Three basic types of tests are performed to show the above requirements, i.e., free water and settling tests, pumpability tests and compressive strength tests.

The free water and settling tests consist of preparing aqueous hydraulic cement slurries containing various amounts of hydratable gel forming material (hydroxyethylcellulose) and set delaying agent (aminotri-(methylenephosphonic acid)) and placing the slurries in covered 500 $cm^3$ plastic beakers. The slurries are observed on a daily basis for solids settlement and free water separation over time periods up to 33 days.

The results of these tests are set forth in Table VI.

The pumpability (maintenance of the compositions in a fluid state) tests are carried out in the same manner as the free water and settling tests described above. That is, various set delayed cement slurries are prepared and placed in additional 500 $cm^3$ plastic beakers which are observed for pumpability, i.e., the samples ale stirred by hand and visually examined for pumpability. The results of these tests are shown in Table VII below.

Cement compositions containing various amounts of hydratable gel forming material (hydroxyethylcellulose) and set delaying agent (aminotri(methylenephosphonic acid)) are combined with various set activating agents and then allowed to set. The set compositions are tested for compressive strength at 24, 48 and 72 hours in accordance with the standard API compressive strength testing procedures set forth in the publication API Specification 10, Second Edition, June 15, 1984, which is incorporated herein by reference. The results of these tests are given in Table VIII below.

TABLE VI

Free Water, Settling and Fluid Time of Set Delayed Cement Compositions

Base Slurry: API Class H Cement + 40%[1] Water (16.2 lbs/gal Density- 1.94 $g/cm^3$)

| Test No. | %[1] Set Delaying Agent[2] | %[1] Hydratable Gel Forming Agent[3] | Free Water and Settling[5] | Fluid Time (Days) |
|---|---|---|---|---|
| 1 | 1.0 | ----- | large | not determined[6] |
| 2 | 1.0 | 1.0[4] | 0 | not determined |
| 3 | 1.0 | 0.75[4] | 0 | not determined |
| 4 | 1.0 | 0.6[4] | 0 | not determined |
| 5 | 1.0 | 0.5 | 0 | not determined |
| 6 | 1.0 | 0.45 | trace | not determined |
| 7 | 1.0 | 0.3 | large | not determined |
| 8 | 0.3 | 0.2 | large | not determined |
| 9 | 0.4 | 0.2 | large | 33 |
| 10 | 0.5 | 0.2 | large | not determined |
| 11 | 0.5 | 0.375 | small | not determined |
| 12 | 0.5 | 0.55 | 0 | not determined |
| 13 | 0.75 | 0.425 | trace | 33+ |
| 14 | 0.75 | 0.55 | 0 | 33+ |
| 15 | 0.75 | 0.475 | trace | 33+ |
| 16 | 1.0 | 0.55 | 0 | 21+ |
| 17 | 1.0 | 0.475 | 0 | 21+ |

1 % by weight of dry cement utilized in base slurry.

2 Fifty percent active, aqueous solution of aminotri(methylenephosphonic acid)-$[N(CH_2PO_3H_2)_3]$.

3 hydroxyethylcellulose

4 This slurry involved a high viscosity.

5 In these slurries, free water and settling were synonymous. That is, slurries with large free water values also settled while slurries with low free water values did not.

6 Since slurries initially demonstrating measurable free water or viscosity problems were considered unacceptable, the fluid time of these slurries was not measured.

TABLE VII

Pumpability of Set Delayed Cement Compositions

Base Slurry: API Class H Cement + 0.5%[1] Hydroxyethylcellulose + 40%[1] Water (16.2 lbs/gal Density - 1.94 g/cm³)

| %[1] Set Delaying Agent[2] | Fluid Time (Days) | |
|---|---|---|
| | 80°F(27°C) | 100°F(38°C) |
| 0.05 | 1 | 1 |
| 0.1 | 2 | 2 |
| 0.2 | 6 | 13 |
| 0.3 | 20 | 28+ |
| 0.4 | 28 | 28+ |
| 0.5 | 28+ | 28+ |

[1] % by weight of dry cement utilized in base slurry.

[2] Aminotri(methylene phosphonic acid)-$[N(CH_2PO_3H_2))_3]$

From Table VI above, it can be seen that a concentration of about 0.5% hydratable gel forming material in the cement compositions provides good settling and free water control without resulting in high viscosity. Table VII shows that the time period the compositions remain in a pumpable fluid state depends upon the quantity of set delaying agent utilized.

TABLE VIII

Compressive Strengths - 80°F (27°C)

Base Slurry: API Class H Cement + 0.5%[1] hydroxyethylcellulose + 40%[1] Water (16.2 lbs/gal Density - 1.94 g/cm³)

| Test No. | %[1] Set Delaying Agent[2] | Set Activating Agents %[1] Paraformaldehyde | %[1] $CaCl_2$ | Compressive Strength PSI (MPa) 1 day | 2 day | 3 day |
|---|---|---|---|---|---|---|
| 1 | 0.05 | 1 | — | 25(.17) | 1215(8.4) | 1825(12.6) |
| 2 | 0.1 | 1 | — | Not Set | 473(3.3) | 1465(10.1) |
| 3 | 0.2 | 1 | — | Not Set | Not Set | 455(3.1) |
| 4 | 0.05 | 1 | 1 | 650(4.5) | 1350(9.3) | 1690(11.6) |
| 5 | 0.1 | 1 | 1 | 586(4.0) | 1725(11.9) | 2295(15.8) |
| 6 | 0.2 | 1 | 1 | 150(1.0) | 1185(8.2) | 2025(14.0) |
| 7 | 0.05 | --- | 1 | 945(6.5) | 1410(9.7) | -- -- |
| 8 | 0.1 | --- | 1 | 710(4.9) | 1185(8.2) | -- -- |
| 9 | 0.2 | --- | 1 | Not Set | 395(2.7) | -- -- |

[1] % by weight of dry cement utilized in base slurry.

[2] Aminotri(methylene phosphonic acid) $[N(CH_2PO_3H_2)_3]$

Example 7

Set delayed cement compositions are prepared and combined with various amounts of various set activating agents as well as with various diluted aqueous sodium silicate solutions to produce low densities.

The slurries are poured into 250 $cm^3$ plastic beakers with lids and placed in water baths at 80° F (27° C). A penetrometer is used to determine 24, 48 and 72 hour and 7 day compressive strengths. The results of these tests are shown in Tables IX and X below.

TABLE IX

Penetrometer Compressive Strengths (PSI)

Base Slurry: API Class H Cement + 1%[1] Set Delaying Agent[2] + 0.5%[1] Hydroxyethylcellulose + 40%[1] Water + Set Activating Agent and Extender[3] Solution
Initial Slurry Density: 16.2 lbs/gal (1.94g/$cm^3$)

| Test No. | Concentration of Set Activating Agent and Extender[3] In Solution, % by Vol | Free Water | Unit | Penetrometer Compressive Strength 1 Day | 2 Day | 3 Day | 7 Day |
|---|---|---|---|---|---|---|---|
| 1 | 7 | Small | psi<br>MPa | 10[4] (10)[5]<br>.07 (.07) | 180[4] (225)[5]<br>1.2 (1.6) | 525[4] (330)[5]<br>3.6 (2.3) | 700[4]+ (570)[5]<br>4.8 (3.9) |
| 2 | 9 | Small | psi<br>MPa | 20 (30)<br>.14 (.21) | 240 (310)<br>1.7 (2.1) | 310 (465)<br>2.1 (3.2) | 400 (700)<br>2.8 (4.8) |
| 3 | 12 | 0 | psi<br>MPa | 10 (10)<br>.07 (.07) | 160 (200)<br>.1 (1.4) | 340 (380)<br>2.3 (2.6) | 700 (660)<br>4.8 (4.5) |
| 4 | 14 | 0 | psi<br>MPa | 20 (10)<br>.14 (.07) | 120 (140)<br>.83 (.96) | 270 (380)<br>1.9 (2.6) | 700 (550)<br>4.8 (3.8) |
| 5 | 18 | 0 | psi<br>MPa | 70 (70)<br>.48 (.48) | 165 (150)<br>1.1 (1.0) | 210 (190)<br>1.4 (1.3) | 700 (700)<br>4.8 (4.8) |

1 Percents are by weight of dry cement utilized in base slurry.

2 Aminotri(methylenephosphonic acid)-[$N(CH_2PO_3H_2)_3$].

3 Aqueous solution containing a sodium silicate with a weight ratio of 1 $Na_2O$ to 3.22 $SiO_2$.

4 compositions also contain paraformaldehyde in an amount of 1% by weight of dry cement.

5 compositions also contain paraformaldehyde and calcium chloride in amounts of 1% by weight of dry cement, each.

TABLE X

Penetrometer Compressive Strengths[4]

Base Slurry: API Class H Cement + 0.5%[1] Set Delaying Agent[2] + 0.5%[1] Hydroxyethylcellulose + 1%[1] $CaCl_2$ + 40%[1] Water
Initial slurry density = 16.2 lbs/gal (1.94 g/cm³)

| Test No. | Density lbs/gal | Density g/cm³ | %[1] Para-formaldehyde | % Extender[3] | 1 Day psi | 1 Day MPa | 2 Day psi | 2 Day MPa | 3 Day psi | 3 Day MPa |
|---|---|---|---|---|---|---|---|---|---|---|
| 1 | 11.28 | 1.35 | — | 100 | 380 | 2.6 | 600 | 4.1 | 700+ | 4.8 |
| 2 | 11.28 | 1.35 | 1 | 100 | 90 | .62 | 220 | 1.5 | 440 | 3.0 |
| 3 | 12.96 | 1.56 | -- | 60 | 700+ | 4.8 | 700+ | 4.8 | 700+ | 4.8 |
| 4 | 12.96 | 1.56 | 1 | 60 | 700+ | 4.8 | 700+ | 4.8 | 700+ | 4.8 |
| 5 | 13.59 | 1.63 | -- | 40 | 380 | 2.6 | 700+ | 4.8 | 700+ | 4.8 |
| 6 | 13.59 | 1.63 | 1 | 40 | 700+ | 4.8 | 700+ | 4.8 | 700+ | 4.8 |

Penetrometer Compressive Strength

[1] Percents are by weight of dry cement utilized in base slurry.

[2] Aminotri(methylenephosphonic acid) $[N(CH_2PO_3H_2)_3]$.

[3] Sea water solution containing 18% by volume sodium silicate with a 1 $Na_2O$ to 3.22 $SiO_2$ weight ratio.

[4] set delayed compositions in fluid state for 28 days prior to being activated.

Table IX shows that the compositions containing 1% paraformaldehyde activating agent produce equivalent compressive strength to the compositions containing 1% amounts of both paraformaldehyde and calcium chloride activating agents.

Table X shows the compressive strengths of cement compositions activated with paraformaldehyde and/or an aqueous sodium silicate solution after the compositions have remained fluid for 28 days. The compositions are diluted with various amounts of sea water containing 18% by volume aqueous sodium silicate to obtain three different densities at the time the activating agents are added to the compositions.

Example 8

Set delayed cement compositions containing various amounts of set delaying agent are prepared. The compositions are refrigerated at 20° F (-6.7° C) for 7 days add then heated to 80° F (26.7° C) for 4 hours. After heating, the compositions are combined with various quantities and combinations of set activating agents, allowed to set and tested for compressive strengths using a penetrometer at 1 and 2 days. The results of these tests are given in Table XI below.

TABLE XI

Compressive Strengths Penetrometer

Base Slurry: API Class H Cement + 40%[1] Water (16.2 lbs/gal Density–1.94g/cm$^3$)

| Test No. | %[1] Set Delaying Agent[2] | %[1] Para-formaldehyde | %[1] $CaCl_2$ | %[1] Formaldehyde | Compressive Strength[3] 1 Day psi | MPa | 2 Day psi | MPa |
|---|---|---|---|---|---|---|---|---|
| 1 | 1 | 2 | - | - | Not Set | | Not Set | |
| 2 | 0.75 | 2 | - | - | Not Set | | Not Set | |
| 3 | 0.5 | 2 | - | - | Not Set | | Not Set | |
| 4 | 1 | 1 | 1 | - | 150 | 1.0 | 700 | 4.8 |
| 5 | 0.75 | 1 | 1 | - | 700+ | 4.8+ | --- | |
| 6 | 0.5 | 1 | 1 | - | 700+ | 4.8+ | --- | |
| 7 | 1 | - | 1 | 1 | Not Set | | Not Set | |
| 8 | 0.75 | - | 1 | 1 | Not Set | | Not Set | |
| 9 | 0.5 | - | 1 | 1 | Not Set | | 700+ | 4.8+ |

[1] Percents are by weight of dry cement utilized in base slurry.

[2] Fifty percent aqueous solution of aminotri(methylenephosphonic acid)-[$N(CH_2PO_3H_2)_3$].

[3] After 7 days at 20°F (-6.7°C) and 4 hrs at 80°F (27°C) before activation

As shown in Table XI, paraformaldehyde in combination with calcium chloride produces the most rapid compressive strength development and the compressive strength is not affected by storing the set delayed slurry at 20° F (-6. 7° C) for seven days.

Example 9

Set delayed cement compositions are prepared using fresh water, sea water and various set delaying agents. The descriptions of the set delaying agents used are set forth in Table XII below. Free water, settling and fluid time tests are carried out on the compositions in the manner described in Example 6. The results of these tests are set forth in Tables XII, XIII and XIV below.

TABLE XII

Description of Set Delaying Agents

| No. | Form | pH | Activity (Active Acid) | Description |
|---|---|---|---|---|
| 1 | Liquid | 2 | 50% | Aqueous solution of aminotri(methylenephosphonic acid)-[$N(CH_2PO_3H_2)_3$]. |
| 2 | Solid | - | 44% | Same as No. 1; dryneutralized ($Na_2CO_3$) solid. |
| 3 | Liquid | 10-11 | 30% | Same as No. 1; aqueous solution of pentasodium salt. |
| 4 | Liquid | 7-8 | 40% | Same as No.1; formulation of sodium and triethanolamine salts. |
| 5 | Liquid | <2 | 60% | 1-hydroxyethylidene-1, 1-diphosphonic acid (HEDP) or etidronic acid (EHDP). |
| 6 | Solid | - | 46% | Same as No. 5; dry neutralized ($Na_2CO_3$) solid. |
| 7 | Solid | - | 90% | Ethylenediamine tetra(methylenephosphonic acid) (EDTMPA). |
| 8 | Liquid | 6-8 | 30% | Same as No. 7; aqueous solution of ammonium salt. |
| 9 | Liquid | 6-8 | 17% | Same as No. 7; aqueous solution of potassium salt. |
| 10 | Solid | - | 97% | Hexamethylenediamine tetra(methylenephosphonic acid) (HMDTMPA). |
| 11 | Liquid | - | 29% | Same as No. 10; aqueous solution of ammonium salt. |
| 12 | Liquid | 6-8 | 25% | Same as No. 10; aqueous solution of potassium salt. |
| 13 | Liquid | <2 | 50% | Diethylenetriamine penta(methylenephosphonic acid) (DETPMPA). |
| 14 | Liquid | - | — | Same as No. 13; aqueous solution of sodium salt. |
| 15 | Liquid | 1 | — | Phosphomethylated residue from the fractional distillation of mixtures of various ethylenediamines. |
| 16 | Liquid | <2 | 40% | Diethylenetriamine penta(methylenephosphonic acid) from different source than 13. |
| 17 | Liquid | <2 | 45% | Same as No. 1; except contains more residual chloride |
| 18 | Liquid | <1 | 46% | UREA tetra(methylenephosphonic acid). |
| 19 | Liquid | 2.1 | 66% | Tri(methylenephosphonic acid) derivative of triethanolamine. |
| 20 | Liquid | 8.5 | 64% | Same as No. 16; aqueous solution of sodium salt from different source than 19. |

TABLE XIII

Free Water, Settling and Fluid Time

Base Slurry: API Class A Cement + 104%[1] Sea Water + 0.6%[1] Hydroxyethylcellulose

Test Conditions: Room Temperature and Pressure

| Test No. | Set Delaying Agent No. (See Table XII) | %[1] Set Delaying Agent | Settling & Free Water | pH | Fluid Time (days) |
|---|---|---|---|---|---|
| 1 | 16 | 1.0 | Slight | 3 | 9 |
| 2 | 16 | 1.0 | Slight | 7 | 11 |
| 3 | 17 | 1.0 | Slight | 3 | 7 |
| 4 | 17 | 1.0 | Slight | 7 | 7 |

[1] % by weight of dry cement utilized in base slurry.

TABLE XIV

Free Water, Settling and Fluid Time

Base Slurry: API Class A Cement + 0.2%[1] Hydroxyethylcelluose + 54%[1] water
Slurry density: 16.2 lbs/gal (1.94 g/cm$^3$)

Test Conditions: Room Temperature and Pressure

| Test No. | Set Delaying Agent No. (See Table VII) | %[1] Set Delaying Agent | Settling & Free Water | Fluid Time (days) |
|---|---|---|---|---|
| 1 | 1 | 1.0 | Slight | 24 |
| 2 | 3 | 1.0 | Slight | 12 |
| 3 | 5 | 1.0 | Slight | 12 |
| 4 | 13 | 1.0 | Slight | 19 |
| 5 | 16 | 1.0 | Slight | 21 |
| 6 | 18 | 1.0 | Slight | 15 |
| 7 | 17 | 1.0 | Slight | 15 |

[1] % by weight of dry cement utilized in base slurry.

The above data shows that a variety of methylenephosphonic acid set delaying agents can be utilized and that API Class A cement slurries are delayed differently than when API Class H cement is utilized. Also, the utilization of sea water changes the effect of the set delaying agents.

Example 10

A set delayed cement composition of this invention is prepared containing API Class H cement, water, hydroxyethylcellulose and aminotri(methylenephosphonic acid). The set delayed composition is combined with various set activating agent or agents and various quantities of sodium silicate solution and allowed to

set. The set compositions are tested for compressive strength at 6 months in accordance with the standard API compressive strength testing procedures set forth in the publication API Specification 10, Second Edition, June 15, 1984. The results of these tests are given in Table XX below.

TABLE XX

Six Month Compressive Strength Data

Base Slurry: API Class H Cement + 0.5%[1] Hydratable Gel Forming Material[2] + 0.5%[1] Set Delaying Agent[3] + 40%[1] Water
Slurry density: 16.2 lbs/(1.94 g/cm³)

Conditions: Ambient Temperature and Pressure

| %[1] Para-formaldehyde $(CH_2O)_x$ | %[1] Calcium Chloride | %[4] Aqueous Sodium Silicate Solution[5] | Density lbs/gal | g/cm³ | Strength psi | MPa |
|---|---|---|---|---|---|---|
| - | - | 100 | 11.5 | 1.4 | 230 | 1.6 |
| - | 1 | 100 | 11.5 | 1.4 | 590 | 4.1 |
| 1 | - | 100 | 11.5 | 1.4 | 480 | 3.3 |
| - | - | 60 | 12.5 | 1.5 | 1700 | 11.7 |
| - | 1 | 60 | 12.5 | 1.5 | 1820 | 12.5 |
| 1 | - | 60 | 12.5 | 1.5 | 2100 | 14.5 |
| - | - | 40 | 13.5 | 1.6 | 2960 | 20.4 |
| - | 1 | 40 | 13.5 | 1.6 | 2630 | 18.1 |
| 1 | - | 40 | 13.5 | 1.6 | 4030 | 27.8 |
| 1 | 1 | -- | 16.2 | 1.9 | 3420 | 23.6 |
| 1 | - | -- | 16.2 | 1.9 | 8950 | 61.7 |
| 1 | 1 | -- | 16.2 | 1.9 | 9900 | 68.2 |

1 % by weight of dry cement utilized in base slurry.

2 hydroxyethylcellulose

3 aminotri(methylenephosphonic acid) $[N(CH_2PO_3H_2)_3]$.

4 % by weight of base slurry

5 An aqueous solution containing 18% by weight sodium silicate with a 1 $Na_2O$ to 3.22 $SiO_2$ weight ratio.

The data of Table XX shows that good compressive strengths are obtained using the cement compositions of the present invention.

## Claims

**1.** A set-retarded cement composition for cementing high temperature zones in wells, comprising:
hydraulic cement;
sufficient water to form a pumpable slurry; and
an effective amount of one or more set retarders derived from methylene phosphonic acid and selected from:
(a) compounds having the general formula:

$$\begin{array}{c} R_1 - N - R_3 \\ | \\ R_2 \end{array}$$

wherein:

| | |
|---|---|
| $R_1$, $R_2$ and $R_3$ are | independently hydrogen or $-CH_2PO_3(X)_2$ with the limitation that one of $R_1$, $R_2$ and $R_3$ is always $-CH_2PO_3(X)_2$ ; |
| X is | hydrogen, an alkali metal cation, ammonium, a protonated amine or an alkaline earth metal cation in which case there is only one X per methylene phosphonate group; and |

at least one X is hydrogen which is associated with the nitrogen atom by way of an intramolecular hydrogen bond between the nitrogen atom and an oxygen atom attached to a phosphorus atom;

(b) compounds having the structural formula:

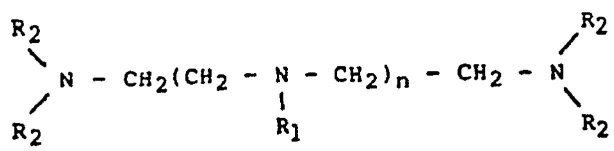

wherein:

| | |
|---|---|
| n is | an integer from 1 to 4; |
| $R_1$ is | hydrogen or $-CH_2PO_3(X)_2$; |
| $R_2$ is | hydrogen, $-CH_2PO_3(X)_2$ or $-CH_2CH_2N(R_3)_2$ wherein $R_3$ is hydrogen or $-CH_2PO_3(X)_2$; |
| X is | hydrogen, an alkali metal cation, ammonium, a protonated amine or an alkaline earth metal cation in which case there is only one X per methylene phosphonate group: and |

at least one of $R_1$, $R_2$ or $R_3$ is $-CH_2PO_3(X)_2$ and one X is hydrogen which is associated with a nitrogen atom by way of an intramolecular hydrogen bond between the nitrogen atom and an oxygen atom attached to a phosphorus atom;

(c) compounds having the structural formula:

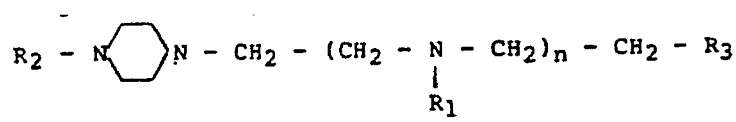

wherein:

| | |
|---|---|
| n is | an integer from 0 to 4; |
| $R_1$ is | hydrogen or $-CH_2PO_3(X)_2$; |
| $R_2$ is | hydrogen, $-CH_2PO_3(X)_2$ or $-CH_2CH_2N(R_4)_2$ wherein $R_4$ is hydrogen or $-CH_2PO_3(X)_2$; |
| $R_3$ is | $-N(R_5)_2$ or 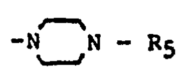 wherein $R_5$ is hydrogen or $-CH_2PO_3(X)_2$; |
| X is | hydrogen, an alkali metal cation, ammonium, a protonated amine or an alkaline earth metal cation in which case there is only one X per methylene phosphonate group; and |

at least one of $R_1$, $R_2$ or $R_3$ is $-CH_2PO_3(X)_2$ and one X is hydrogen which is associated with a nitrogen atom by way of an intramolecular hydrogen bond between the nitrogen atom and an oxygen atom attached to a phosphorus atom;

(d) compounds having the structural formula:

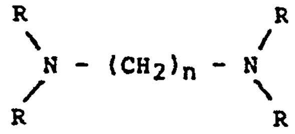 or 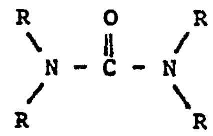 or

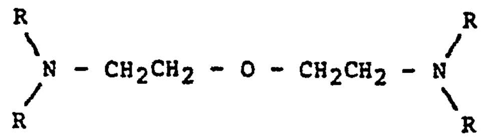

wherein:

n is an integer from 2 to 6;

R is hydrogen, $-CH_2PO_3(X)_2$ or $-CH_2CH_2N(R_1)_2$ wherein $R_1$ is hydrogen or $-CH_2PO_3(X)_2$;

X is hydrogen, an alkali metal cation, ammonium, a protonated amine or an alkaline earth metal cation in which case there is only one X per methylene phosphonate group; and

at least one R is $-CH_2PO_3(X)_2$ and one X is hydrogen which is associated with a nitrogen atom by way of an intramolecular hydrogen bond between the nitrogen atom and an oxygen atom attached to a phosphorus atom;

(e) compounds having the structural formula:

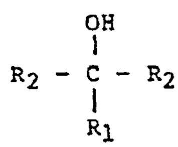

wherein:

$R_1$ is hydrogen or $-CH_3$;

$R_2$ is $-CH_2PO_3(X)_2$ or $-CH_2NHCH_2PO_3(X)_2$;

X is hydrogen, an alkali metal cation, ammonium, a protonated amine or an alkaline earth metal cation in which case there is only one X per methylene phosphonate group; and

when nitrogen is present, at least one X is hydrogen which is associated with the nitrogen atom by way of an intramolecular hydrogen bond between the nitrogen atom and an oxygen atom attached to a phosphorus atom.

**2.** A composition according to claim 1, wherein said retarder is present in said composition in an amount of 1% to 10% by weight of the dry cement.

**3.** A composition according to claim 1 or 2, which further includes particulate crystalline silica having a particle size of less than 10 mesh (sieve aperture 2mm) in an amount of 17% to 35% by weight of the dry cement.

**4.** A composition according to claim 1,2 or 3, wherein the set retarder is one or more of ethylenediamine substituted with 2 or 3 moles of methylene phosphonic acid, diethylenetriamine substituted with 2 or 3 moles of methylene phosphonic acid, and triethylenetetramine substituted with 1 to 6 moles of methylene phosphonic acid.

**5.** A composition according to any of claims 1 to 4, wherein said hydraulic cement is Portland cement, said water is present in an amount of 35% to 62% by weight of the dry cement, and the retarder is present in an amount of 2% to 8% by weight of the dry cement.

**6.** A composition according to claim 3, wherein the hydraulic cement is Portland cement, the silica is present in an amount of 25% to 35% by weight of dry cement, the water is present in an amount of 45% to 55% by weight of dry cement, and the retarder is methylene phosphonic acid substituted triethylenetetramine having 3 methylene phosphonic acid groups per molecule and is present in an

amount of 3% to 6% by weight of the dry cement.

**7.** A method of cementing a high temperature subterranean zone penetrated by a wellbore wherein a settable aqueous hydraulic cement slurry is placed in said zone, characterised in that the cement composition is as defined in any of claims 1 to 6.

**8.** A composition according to claim 1, which also comprises a hydratable gel forming material selected from hydratable cellulose derivatives, polyvinyl alcohol, and polymers of 2-acrylamido-2-methylpropane sulfonic acid, sodium vinylsulfonate, acrylamide, N,N-dimethylacrylamide, acrylic acid, and any mixture of two or more of the foregoing compounds present in said slurry in an amount in the range of 0.01% to 1.5% by weight of the dry cement, to minimize the settling of solids and separation of free water therefrom; and wherein the retarder is selected from (a), (b), (c), (d) and (e) as defined in claim 1.

**9.** A composition according to claim 8, wherein said retarder is one or more of aminotri-(methylenephosphonic acid), ethylenediamine substituted with from 1 to 4 moles of methylenephosphonic acid, diethylenetriamine substituted with from 1 to 5 moles of methylenephosphonic acid, and triethylenetetramine substituted with from 1 to 6 moles of methylenephosphonic acid.

**10.** A composition according to claim 8 or 9, wherein the hydratable gel forming material is one or more of hydroxyalkylcellulose, carboxyalkylcellulose, and carboxyalkylhydroxyalkylcellulose, and is present in an amount of 0.1% to 1.0% by weight of the dry cement; and the retarder is present in an amount of 0.1% to 2.5% by weight of the dry cement.

**11.** A composition according to claim 10, wherein said gel forming material is hydroxyethylcellulose present in an amount of 0.1% to 0.5% by weight of the dry cement, and optionally said retarder is aminotri-(methylenephosphonic acid) present in an amount of 0.2% to 0.7% by weight of the dry cement.

**12.** A composition according to claim 8, wherein the hydraulic cement comprises API Class H Portland cement; the water is present in an amount of 38% to 46% by weight of the dry cement; the hydratable gel forming material is hydroxyethylcellulose present in an amount of 0.1% to 0.5% by weight of the dry cement and the retarder is aminotri-(methylenephosphonic acid) present in an amount of 0.2% to 0.7% preferably 0.5% by weight of the dry cement.

**13.** A composition according to any of claims 1 to 6 and 8 to 12, which further includes one or more set activating agents selected from aqueous sodium silicate solution, paraformaldehyde, and calcium chloride.

**14.** A method of cementing a zone at a remote location comprising the steps of: preparing a set retarded cement composition as claimed in any of claims 8 to 12; transporting said set retarded cement composition to said remote location; mixing one or more set activating agents with said cement composition just prior to the placement thereof, said agent(s) being selected from aqueous sodium silicate solution, paraformaldehyde and calcium chloride; and placing the resulting mixture in said zone.

## Revendications

**1.** Composition de ciment à prise retardée, pour la cimentation de zones à haute température dans des puits, comprenant:
du ciment hydraulique,
une quantité d'eau suffisante pour former un laitier apte à être pompé, et
une quantité efficace d'un ou plusieurs retardateurs de prise dérivés de l'acide méthylènephosphonique, et choisi(s) parmi
(a) des composés possédant la formule générale: dans laquelle

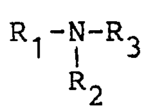

$R_1$, $R_2$ et $R_3$ sont indépendamment des atomes d'hydrogène ou $-CH_2PO_3(X)_2$, avec la restriction que l'un des radicaux $R_1$, $R_2$ est $R_3$ est toujours $-CH_2PO_3(X)_2$;

X est un atome d'hydrogène ou un cation alcalin, l'ion ammonium, une amine protonée ou un cation alcalino-terreux, auquel cas il n'y a qu'un X par groupe méthylène-phosphonate; et

au moins un X est un atome d'hydrogène qui est lié à l'atome d'azote au moyen d'une liaison hydrogène intramoléculaire entre l'atome d'azote et un atome d'oxygène lié à un atome de phosphore;

(b) des composés possédant la formule développée: dans laquelle:

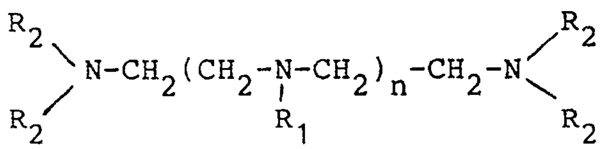

n est un nombre entier allant de 1 à 4;

$R_1$ est un atome d'hydrogène ou $-CH_2PO_3(X)_2$;

$R_2$ est un atome d'hydrogène, $-CH_2PO_3(x)_2$ ou $-CH_2CH_2N(R_3)_2$, $R_3$ étant un atome d'hydrogène ou $-CH_2PO_3(X)_2$;

X est un atome d'hydrogène, un cation alcalin, l'ion ammonium, une amine protonée ou un cation alcalino-terreux, auquel cas il n'y a qu'un X par groupe méthylène-phosphonate; et

au moins l'un des radicaux $R_1$, $R_2$ ou $R_3$ est $-CH_2PO_3(x)_2$ et un X est un atome d'hydrogène qui est lié à un atome d'azote au moyen d'une liaison hydrogène intramoléculaire entre l'atome d'azote et un atome d'oxygène lié à un atome de phosphore;

(c) des composés possédant la formule développée:

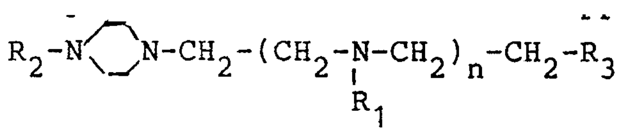

dans laquelle:

n est un nombre entier allant de 0 à 4;

$R_1$ est un atome d'hydrogène ou $-CH_2PO_3(X)_2$;

$R_2$ est un atome d'hydrogène, $-CH_2PO_3(X)_2$ ou $-CH_2CH_2N(R_4)_2$, $R_4$ étant un atome d'hydrogène ou $-CH_2PO_3(X)_2$;

$R_3$ est $-N(R_5)_2$ ou

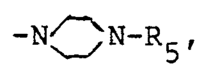

$R_5$ étant un atome d'hydrogène ou $-CH_2PO_3(X)_2$;

X est un atome d'hydrogène, un cation alcalin, l'ion ammonium, une amine protonée ou un cation alcalino-terreux, auquel cas il n'y a qu'un X par groupe méthylène-phosphonate; et

au moins l'un des radicaux $R_1$, $R_2$ ou $R_3$ est $-CH_2PO_3(X)_2$ et un X est un atome d'hydrogène qui est lié à un atome d'azote au moyen d'une liaison hydrogène intramoléculaire entre l'atome d'azote et un atome d'oxygène lié à un atome de phosphore;

(d) des composés possédant la formule développée:

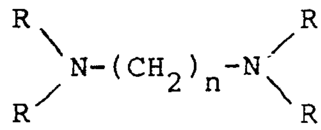 ou 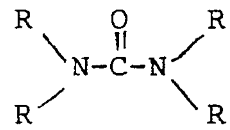 ou

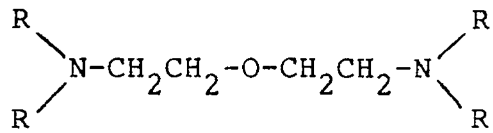

dans laquelle:

- n est un nombre entier allant de 2 à 6;
- R est un atome d'hydrogène, $-CH_2PO_3(X)_2$ ou $-CH_2CH_2N(R_1)_2$, $R_1$ étant un atome d'hydrogène ou $-CH_2PO_3(X)_2$;
- X est un atome d'hydrogène, un cation alcalin, l'ion ammonium, une amine protonée ou un cation alcalino-terreux, auquel cas il n'y a qu'un X par groupe méthylène-phosphonate; et

au moins un radical R est $-CH_2PO_3(X)_2$ et un X est un atome d'hydrogène qui est lié à un atome d'azote au moyen d'une liaison hydrogène intramoléculaire entre l'atome d'azote et un atome d'oxygène lié à un atome de phosphore;

(e) des composés possédant la formule développée:

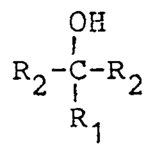

dans laquelle:

- $R_1$ est un atome d'hydrogène ou $-CH_3$;
- $R_2$ est $-CH_2PO_3(X)_2$ ou $-CH_2NHCH_2PO_3(X)_2$;
- X est un atome d'hydrogène, un cation alcalin, l'ion ammonium, une amine protonée ou un cation alcalino-terreux, auquel cas il n'y a qu'un X par groupe méthylène-phosphonate; et

dans le cas de la présence d'azote, au moins un X est un atome d'hydrogène qui est lié à un atome d'azote au moyen d'une liaison hydrogène intramoléculaire entre l'atome d'azote et un atome d'oxygène lié à un atome de phosphore.

**2.** Composition selon la revendication 1, dans laquelle ledit retardateur est présent dans ladite composition en une quantité de 1 à 10 % en poids du ciment sec.

**3.** Composition selon la revendication 1 ou 2, qui comprend en outre de la silice cristalline particulaire ayant une taille de particule inférieure à 2 mm (n° de tamis US 10), en une quantité de 17 à 35 % en poids du ciment sec.

**4.** Composition selon la revendication 1, 2 ou 3, dans laquelle le retardateur de prise est un ou plusieurs composés de type éthylènediamine substituée par 2 ou 3 moles d'acide méthylènephosphonique, diéthylènetriamine substituée par 2 ou 3 moles d'acide méthylènephosphonique, et triéthylènetétramine substituée par 1 à 6 moles d'acide méthylènephosphonique.

**5.** Composition selon l'une quelconque des revendications 1 à 4, dans laquelle ledit ciment hydraulique est le ciment portland, ladite eau est présente en une quantité de 35 à 62 % en poids du ciment sec, et le retardateur est présent en une quantité de 2 à 8 % en poids du ciment sec.

**6.** Composition selon la revendication 3, dans laquelle le ciment hydraulique est le ciment portland, la silice est présente en une quantité de 25 à 35 % en poids du ciment sec, l'eau est présente en une quantité de 45 à 55 % en poids du ciment sec, et le retardateur est la triéthylènetétramine substituée par l'acide méthylènephosphonique, comportant 3 groupes acide méthylènephosphonique par molécule, et est présent en une quantité de 3 à 6 % en poids du ciment sec.

7. Procédé de cimentation d'une zone souterraine à haute température, pénétrée par un trou de forage, dans lequel un laitier aqueux de ciment hydraulique apte à la prise est placé dans ladite zone, caractérisé en ce que la composition de ciment est telle que définie dans l'une quelconque des revendications 1 à 6.

8. Composition selon la revendication 1, qui comprend en outre une substance hydratable formant gel, choisie parmi des dérivés de cellulose hydratable, le poly(alcool vinylique) et des polymères d'acide 2-acrylamido-2-méthylpropane-sulfonique, vinylsulfonate de sodium, acrylamide, N,N-diméthylacrylamide, acide acrylique et un mélange quelconque de deux des composés précédents ou plus, présente dans ledit laitier en une quantité dans la plage de 0,01 à 1,5 % en poids du ciment sec, pour réduire au minimum la sédimentation de solides et la séparaton d'eau libre à partir de cette composition; et dans laquelle le retardateur est choisi parmi (a), (b), (c), (d) et (e) tels que définis dans la revendication 1.

9. Composition selon la revendication 8, dans laquelle ledit retardateur est un ou plusieurs composés choisis parmi l'aminotri(acide méthylènephosphonique), l'éthylènediamine substituée par 1 à 4 modes d'acide méthylènephosphonique, la diéthylènediamine substituée par 1 à 5 modes d'acide méthylènephosphonique, et la triéthylènetétramine substituée par 1 à 6 modes d'acide méthylènephosphonique.

10. Composition selon la revendication 8 ou 9, dans laquelle la substance hydratable formant gel est une ou plusieurs substances choisies parmi une hydroxyalkylcellulose, une carboxyalkylcellulose et une carboxyalkylhydroxyalkylcellulose, et est présente en une quantité de 0,1 à 1,0 % en poids du ciment sec; et le retardateur est présent en une quantité de 0,1 à 2,5 % en poids du ciment sec.

11. Composition selon la revendication 10, dans laquelle ladite substance formant gel est l'hydroxyéthylcellulose présente en une quantité de 0,1 à 0,5 % en poids du ciment sec, et éventuellement ledit retardateur est l'aminotri(acide méthylènephosphonique), présent en une quantité de 0,2 à 0,7 % en poids du ciment sec.

12. Composition selon la revendication 8, dans laquelle le ciment hydraulique comprend le ciment portland classe API H, l'eau est présente en une quantité de 38 à 46 % en poids du ciment sec, la substance hydratable formant gel est l'hydroxyéthylcellulose présente en une quantité de 0,1 à 0,5 % en poids du ciment sec, et le retardateur est l'aminotri(acide méthylènephosphonique), présent en une quantité de 0,2 à 0,7 %, de préférence de 0,5 % en poids du ciment sec.

13. Composition selon l'une quelconque des revendications 1 à 6 et 8 à 12, qui comprend en outre un ou plusieurs agents activateurs de prise, choisis parmi une solution aqueuse de silicate de sodium, le paraformaldéhyde et le chlorure de calcium.

14. Procédé de cimentation d'une zone en un emplacement éloigné, comprenant les étapes de: préparation d'une composition de ciment à prise retardée, selon l'une quelconque des revendications 8 à 12, le transport de ladite composition de ciment à prise retardée vers ledit emplacement éloigné, le mélange d'un ou plusieurs agents activateurs de prise avec ladite composition de ciment juste avant la mise en place de celle-ci, le(s)dit(s) agent(s) étant choisi(s) parmi une solution aqueuse de silicate de sodium, le paraformaldéhyde et le chlorure de calcium; et la mise en place du mélange résultant dans ladite zone.

**Patentansprüche**

1. Abbindeverzögerte Zementzusammensetzung zur Zementierung von Hochtemperaturzonen in Bohrungen, enthaltend:

hydraulischen Zement;

Wasser in einer Menge, die zur Bildung eines pumpfähigen Schlamms ausreicht; und

eine wirksame Menge eines oder mehrerer von Methylenphosphonsäure abgeleiteten Abbindeverzögerer, ausgewählt aus:

(a) Verbindungen der allgemeinen Formel

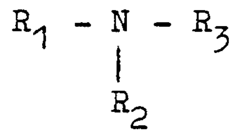

worin:

$R_1$, $R_2$ und $R_3$ unabhängig voneinander Wasserstoff oder $-CH_2PO_3(X)_2$ ist, mit der Einschränkung, daß wenigstens einer der Reste $R_1$, $R_2$ und $R_3$ $-CH_2PO_3(X)_2$ ist,

X Wasserstoff, ein Alkalimetallkation, Ammonium, ein protoniertes Amin oder ein Erdalkalimetallkation ist, in welchem Fall nur ein X für jede Methylenphosphonatgruppe vorhanden ist, und

wenigstens ein Rest X Wasserstoff ist, der dem Stickstoffatom über eine intramolekulare Wasserstoffbrücke zwischen dem Stickstoffatom und einem an ein Phosphoratom gebundenen Sauerstoffatom zugeordnet ist;

(b) Verbindungen der Strukturformel

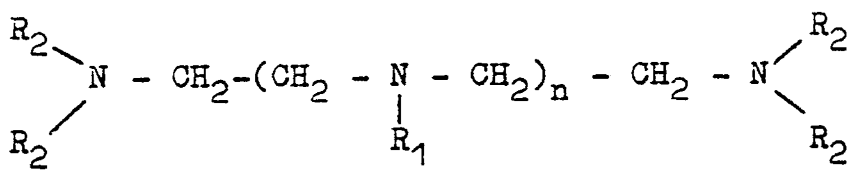

worin:

n eine ganze Zahl von 1 bis 4 ist,

$R_1$ Wasserstoff oder $-CH_2PO_5(X)_2$,

$R_2$ Wasserstoff, $-CH_2PO_3(X)_2$ oder $-CH_2-CH_2N(R_3)_2$, in dem $R_3$ Wasserstoff oder $-CH_2PO_3-(X)_2$ ist,

X Wasserstoff, ein Alkalimetallkation, Ammonium, ein protoniertes Amin oder ein Erdalkalimetallkation ist, in welchem Fall nur ein X für jede Methylenphosphonatgruppe vorhanden ist; und

wenigstens einer der Reste $R_1$, $R_2$ oder $R_3$ $-CH_2PO_3(X)_2$ ist und ein Rest X Wasserstoff ist, der einem Stickstoffatom über eine intramolekulare Wasserstoffbrücke zwischen dem Stickstoffatom und einem an ein Phosphoratom gebundenen Sauerstoffatom zugeordnet ist;

(c) Verbindungen der Strukturformel

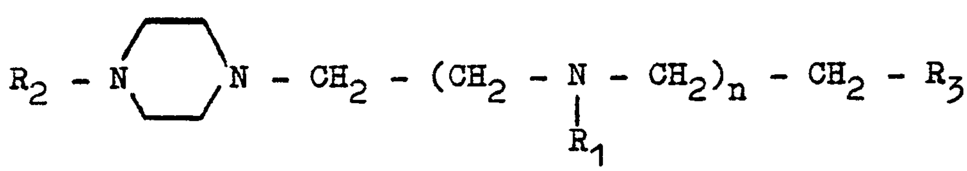

worin

n eine ganze Zahl von 0 bis 4 ist,

$R_1$ Wasserstoff oder $-CH_2PO_3(X)_2$,

$R_2$ Wasserstoff, $-CH_2PO_3(X)_2$ oder $-CH_2-CH_2N(R_4)_2$, in dem $R_4$ Wasserstoff oder $-CH_2PO_3-(X)_2$ ist,

R3 $-N(R_5)_2$ oder

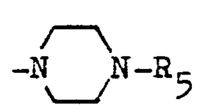 ,

worin $R_5$ Wasserstoff oder $-CH_2PO_3(X)_2$ ist,

X Wasserstoff, ein Alkalimetallkation, Ammonium, ein protoniertes Amin oder ein Erdalkalimetallkation ist, in welchem Fall nur ein X für jede Methylenphosphonatgruppe vorhanden ist, und

wenigstens einer der Reste $R_1$, $R_2$ oder $R_3$ $-CH_2PO_3(X)_2$ und ein Rest X Wasserstoff ist, der einem Stickstoffatom über eine intramolekulare Wasserstoffbrücke zwischen dem Stickstoffatom und einem an ein Phosphoratom gebundenen Sauerstoffatom zugeordnet ist;

(d) Verbindungen der Strukturformel

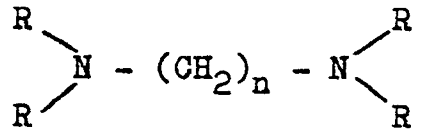 oder 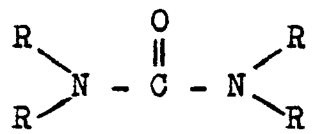 oder

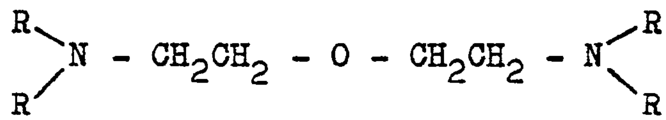

worin

n eine ganze Zahl von 2 bis 6 ist,

R Wasserstoff, $-CH_2PO_3(X)_2$ oder $-CH_2CH_2N(R_1)_2$, worin $R_1$ Wasserstoff oder $-CH_2PO_3(X)_2$ ist,

X Wasserstoff, ein Alkalimetallkation, Ammonium, ein protoniertes Amin oder ein Erdalkalimetallkation ist, in welchen Fall nur ein X für jede Methylenphosphonatgruppe vorhanden ist, und

wenigstens ein Rest R $-CH_2PO_3(X)_2$ und ein Rest X Wasserstoff ist, der einem Stickstoffatom über eine intramolekulare Wasserstoffbrücke zwischen dem Stickstoffatom und einem an ein Phosphoratom gebundenen Sauerstoffatom zugeordnet ist;

(e) Verbindungen der Strukturformel:

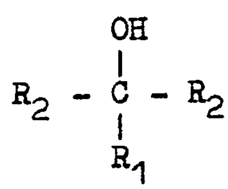

worin:

$R_1$ Wasserstoff oder Methyl ist,

$R_2$ $-CH_2PO_3(X)_2$ oder $-CH_2$-NH-$CH_2PO_3(X)_2$,

X Wasserstoff, ein Alkalimetallkation, Ammonium, ein protoniertes Amin oder ein Erdalkalimetallkation ist, in welchem Fall nur ein X für jede Methylenphosphonatgruppe vorhanden ist, und

in Anwesenheit von Stickstoff wenigstens ein X Wasserstoff ist, der dem Stickstoffatom über eine intramolekulare Wasserstoffbrücke zwischen dem Stickstoffatom und einem an ein Phosphoratom gebundenen Sauerstoffatom zugeordnet ist.

**2.** Zusammensetzung nach Anspruch 1, dadurch gekennzeichnet, daß der Verzögerer in dar Zusammensetzung in einer Menge von 1 Gew.-% bis 10 Gew.-%, bezogen auf das Gewicht des trockenen Zementes, vorhanden ist.

**3.** Zusammentsetzung nach Anspruch 1 oder 2, dadurch gekennzeichnet, daß die Zusammensetzung ferner körniges, kristallines Siliciumdioxid mit einer Korngröße weniger als 10 mesh in einer Menge von

17 Gew.-% bis 35 Gew.-%, bezogen auf das Gewicht des trockenen Zementes, enthält.

**4.** Zusammensetzung nach Anspruch 1, 2 oder 3, dadurch gekennzeichnet, daß der Abbindeverzögerer eine oder mehrere der Verbindungen Ethylendiamin, das mit 2 oder 3 Mol Methylenphosphonsäure substituiert ist, Diethylentriamin, das mit 2 oder 3 Mol Methylenphosphonsäure substituiert ist, und Triethylentetramin, das mit 1 bis 6 Mol Methylenphosphonsäure substituiert ist, ist.

**5.** Zusammensetzung nach einem der Ansprüche 1 bis 4, dadurch gekennzeichnet, daß der hydraulische Zement Portlandzement ist, das Wasser in einer Menge von 35 Gew.-% bis 62 Gew.-%, bezogen auf das Gewicht des trockenen Zementes, vorhanden ist, und der Verzögerer in einer Menge von 2 Gew.-% bis 8 Gew.-%, bezogen auf das Gewicht des trockenen Zementes, vorhanden ist.

**6.** Zusammensetzung nach Anspruch 3, dadurch gekennzeichnet, daß der hydraulische Zement Portlandzement ist, das Siliciumdioxid in einer Menge von 25 Gew.-% bis 35 Gew.-%, bezogen auf das Gewicht des trockenen Zementes, vorhanden ist, das Wasser in einer Menge von 45 Gew.-% bis 55 Gew.-%, bezogen auf das Gewicht des trockenen Zementes, vorhanden ist, und der Verzögerer ein durch Methylenphosphonsäure substituiertes Triethylentetramin mit 3 Methylenphosphonsäuregruppen im Mol und in einer Menge von 3 Gew.-% bis 6 Gew. -%, bezogen auf das Gewicht des trockenen Zementes, vorhanden ist.

**7.** Verfahren zur Zementierung einer unterirdischen Hochtemperaturzone, die von einem Bohrloch durchsetzt ist, bei welchem Verfahren ein abbindender, wäßriger hydraulischer Zementschlamm in die Zone eingebracht wird, gekennzeichnet durch eine Zementzusammensetzung nach einem der Ansprüche 1 bis 6.

**8.** Zusammensetzung nach Anspruch 1, dadurch gekennzeichnet, daß darin auch ein hydratisierbares gelbildendes Material enthalten ist, ausgewählt aus hydratisierbaren Cellulosederivaten, Polyvinylalkohol und Polymeren von 2-Acrylamido-2-methylpropansulfonsäure, Natriumvinylsulfonat, Acrylamid, N,N-Dimethylacrylamid, Acrylsäure und Mischungen der vorgenannten Verbindungen, die in dem Schlamm in einer Menge im Bereich von 0,01 Gew.-% bis 1,5 Gew.-%, bezogen auf das Gewicht des trockenen Zementes, vorhanden ist, um das Absetzen von Feststoffen und die Abscheidung von freiem Wasser daraus auf ein Minimum zu bringen, und daß der Verzögerer aus den Verbindungen (a), (b), (c), (d) und (e) nach Anspruch 1 ausgewählt ist.

**9.** Zusammensetzung nach Anspruch 8, dadurch gekennzeichnet, daß der Verzögerer ein oder mehrere der Verbindungen Aminotrimethylenphosphonsäure, Ethylendiamin, das mit 1 bis 4 Mol Methylenphosphonsäure substituiert ist, Diethylemtriamin, das mit 1 bis 5 Mol Methylenphosphonsäure substituiert ist, und Triethylentetramin, das mit 1 bis 6 Mol Methylenphosphonsäure substituiert ist, ist.

**10.** Zusammensetzung nach Anspruch 8 oder 9, dadurch gekennzeichnet, daß das hydratisierbare gelbildende Material eine oder mehrere der Verbindungen Hydroxyalkylcellulose, Carboxyalkylcellulose und Carboxyalkylhydroxyalkylcellulose ist und in einer Menge von 0,1 Gew.-% bis 1,0 Gew.-%, bezogen auf das Gewicht des trockenen Zementes, vorhanden ist, und daß der Verzögerer in einer Menge von 0,1 Gew.-% bis 2,5 Gew.-%, bezogen auf das Gewicht des trockenen Zementes, vorhanden ist.

**11.** Zusammensetzung nach Anspruch 10, dadurch gekennzeichnet, daß das hydratisierbare gelbildende Material Hydroxyethylcellulose und in einer Menge von 0,1 Gew.-% bis 0,5 Gew.-%, bezogen auf das Gewicht des trockenen Zementes, vorhanden ist, und daß gegebenenfalls der Verzögerer Aminotrimethylenphosphonsäure und in einer Menge von 0,2 Gew.-% bis 0,7 Gew.-%, bezogen auf das Gewicht des trockenen Zementes, vorhanden ist.

**12.** Zusammensetzung nach Anspruch 8, dadurch gekennzeichnet, daß der hydraulische Zement Portlandzement der API-Klasse H ist, das Wasser in einer Menge von 38 Gew.-% bis 46 Gew.-%, bezogen auf das Gewicht des trockenen Zementes, vorhanden ist, das hydratisierbare gelbildende Material Hydroxyethylcellulose und in einer Menge von 0,1 Gew.-% bis 0,5 Gew.-%, bezogen auf das Gewicht des trockenen Zementes, vorhanden ist,und der Verzögerer Aminotrimethylenphosphonsäure und in einer Menge von 0,2 Gew.-% bis 0,7 Gew.-%, vorzugsweise 0,5 Gew.-%, bezogen auf das Gewicht des trockenen Zementes, vorhanden ist.

**13.** Zusammensetzung nach einem der Ansprüche 1 bis 12, dadurch gekennzeichnet, daß darin weiterhin Abbindeaktivierungsmittel, ausgewählt aus wäßriger Natriumsilikatlösung, Paraformaldehyd und Calciumchlorid, enthalten sind.

**14.** Verfahren zur Zementierung einer Zone an einem entfernt gelegenen Ort, enthaltend die Schritte: Herstellen einer abbindeverzögerten Zementzusammensetzung nach einem der Ansprüche 8 bis 12, Transportieren der abbindeverzögerten Zementzusammensetzung zu dem entfernt liegenden Ort, Vermischen eines oder mehrerer Abbindeaktivierungsmittel mit der Zementzusammensetzung unmittelbar vor deren Plazierung, wobei diese(s) Mittel aus wäßriger Natriumsilikatlösung, Paraformaldehyd und Calciumchlorid ausgewählt wird, und Plazieren der gebildeten Mischung in der Zone.